# EUROPÄISCHE PATENTSCHRIFT

(11) **EP 3 150 410 B1**
(45) Veröffentlichungstag und Bekanntmachung des Hinweises auf die Patenterteilung: **08.05.2019**
(21) Anmeldenummer: 16190099.8
(22) Anmeldetag: 22.09.2016
(51) Int. Cl.: B60D 1/48, B60D 1/06

(54) **ANHÄNGEKUPPLUNG MIT EINER TRÄGERANORDNUNG**
DRAWBAR WITH A SUPPORT ASSEMBLY
ATTELAGE DOTÉ D'UN SYSTÈME SUPPORT

(30) Priorität: 30.09.2015 DE 102015116631; 17.06.2016 DE 102016111174
(43) Veröffentlichungstag der Anmeldung: 05.04.2017
(73) Patentinhaber: WESTFALIA - Automotive GmbH, 33378 Rheda-Wiedenbrück (DE)
(72) Erfinder: Angermann, Kay, D-04720 Döbeln (DE); Kuhlen, Arne, D-59320 Ennigerloh (DE)
(74) Vertreter: Patentanwälte Bregenzer und Reule Partnerschaftsgesellschaft mbB

(56) Entgegenhaltungen:
- EP-A1- 1 466 787
- DE-A1-102013 018 771

## Beschreibung

Die Erfindung betrifft eine Anhängekupplung für ein Kraftfahrzeug mit einer Trägeranordnung, die einen zur Anordnung an einem Heck eines Kraftfahrzeugs vorgesehenen Querträger und einen an dem Querträger angeordneten Halter zum Halten eines Kupplungsarms der Anhängekupplung aufweist, wobei der Kupplungsarm zur Befestigung eines Anhängers oder eines Lastenträgers vorgesehen ist, wobei der Halter mindestens einen Bolzen umfasst, der in einer Steckachsrichtung in eine Durchtrittsöffnung eines Aufnahmeteils eingesteckt ist und mit einem Bolzenkopf an dem Aufnahmeteil neben der Durchtrittsöffnung abgestützt ist.

Eine derartige Anhängekupplung ist beispielsweise in EP 1 466 787 A1 erläutert.

An sich ist es bekannt, bei einer Anhängekupplung zur Befestigung eines Halters einen Bolzen oder mehrere Bolzen einzusetzen, beispielsweise bei einer in DE 10 2013 018 771 A1 erläuterten Anhängekupplung. Der Bolzenkopf wird bei dieser Anhängekupplung durch einen Grundkörper des Halters bereitgestellt, der sich am Querträger abstützt. Eine derartige Befestigung eignet sich jedoch nicht für jede Anhängekupplung. Insbesondere bei der Verwendung von hochfesten Werkstoffen für den Querträger sind besondere Anforderungen zu beachten.

Es ist daher die Aufgabe der vorliegenden Erfindung, ein Verbindungskonzept für einen Halter zur Befestigung an einem Querträger bereitzustellen.

Zur Lösung der Aufgabe ist eine Anhängekupplung gemäß der technischen Lehre des Anspruchs 1 vorgesehen.

Dabei ist ein Gedanke, dass der mindestens eine Bolzen sozusagen die Basis für ein Anbauteil darstellt. Der mindestens eine Bolzen ist an dem Aufnahmeteil vorzugsweise sowohl längs der Steckachsrichtung als auch um die Steckachsrichtung herum, nämlich verdrehgesichert, gehalten. Es versteht sich, dass eine derartige Sicherungsmaßnahme ausreicht, d.h. dass der mindestens eine Bolzen auch nur verdrehgesichert gehalten sein kann oder nur längs und/oder entgegen der Steckachsrichtung gesichert sein kann. Jedenfalls steht der mindestens eine verdrehgesicherte und/oder bezüglich der Steckachsrichtung fixierte Bolzen für weitere Montagezwecke in optimaler Weise zur Verfügung.

Es versteht sich, dass mehrere Bolzen dieser Art vorgesehen sein können oder in dieser Art an dem Aufnahmeteil befestigt sein können. Wenn mehrere Bolzen, beispielweise mindestens zwei Bolzen oder weitere Bolzen, vorgesehen sind, können diese an sich ebenfalls eine Verdrehsicherung darstellen.

Eine erfindungsgemäße Maßnahme ist es, wenn der Bolzenschaft ein Schraubgewinde aufweist. Somit kann das Anbauteil mit dem Bolzenschaft direkt verschraubt werden. Es ist erfindungsgemäß aber auch möglich, dass der Bolzenschaft lediglich eine Klemmbasis zur Verklemmung des Anbauteils bildet.

Weiterhin ist es vorteilhaft, wenn mindestens eine Verdrehsicherungskontur am Bolzen angeordnet ist, beispielsweise am Bolzenkopf unmittelbar. Beispielsweise kann der Bolzenkopf eine polygonale Außenumfangskontur aufweisen, beispielsweise eine rechteckige, quadratische oder sechseckige Außenumfangskontur, die dann unmittelbar mit der Verdrehsicherungskontur des Aufnahmeteils in formschlüssigem Eingriff ist. Es ist aber auch möglich, dass beispielsweise unterhalb des Bolzenkopfes eine Verdrehsicherungskontur, beispielsweise ein Mehrkant oder eine polygonale Verdrehsicherungskontur, vorgesehen ist.

An dieser Stelle sei erwähnt, dass vorteilhaft die Verdrehsicherungskontur des Aufnahmeteils eine zu der Verdrehsicherungskontur des mindestens einen Bolzens passende Verdrehsicherungskontur ist. Beispielsweise sind die Verdrehsicherungskonturen im Querschnitt geometrisch gleich, insbesondere gleich groß ausgestaltet. Die Verdrehsicherungskonturen passen zweckmäßigerweise formschlüssig ineinander. Aber auch nicht unmittelbar zueinander passende Verdrehsicherungskonturen, beispielsweise unterschiedlich polygonale Konturen, können eine Verdrehsicherung realisieren.

Bevorzugt sind als Verdrehsicherungskonturen Vierkant-Konturen oder quadratische Konturen.

Weiterhin ist es vorteilhaft, wenn der mindestens eine Bolzen eine Schlossschraube aufweist oder als eine Schlossschraube ausgestaltet ist. Derartige Schlossschrauben sind gängig und leicht zu beschaffen.

Eine Ausführungsform kann vorsehen, dass der Querträger oder ein Seitenträger der Trägeranordnung das Aufnahmeteil bildet. Somit bildet also quasi der Querträger oder Seitenträger selbst das Aufnahmeteil.

Vorteilhaft ist es, wenn der mindestens eine Bolzen einander gegenüberliegende Wände eines Profilkörpers, insbesondere eines Profilrohrs oder eines Rohrkörpers, der Trägeranordnung durchdringt. Der Profilkörper kann beispielsweise den Querträger darstellen oder einen Teil des Querträgers bilden. Insbesondere kann auch der Querträger selbst als ein Profilkörper ausgestaltet sein, beispielsweise als ein Profilrohr.

Beispielsweise kann der Profilkörper, insbesondere das Trägerrohr, das Aufnahmeteil direkt darstellen oder bilden.

Bevorzugt ist es, wenn die Umformungspartie einstückig durch den Querträger gebildet ist.

Bevorzugt ist es, wenn die Umformungspartie durch einen von dem Aufnahmeteil separaten Umformkörper, beispielsweise den Querträger oder ein Profil des Querträgers, gebildet ist. Die Umformungspartie kann beispielsweise durch eine Innenhochdruckumformung oder eine sonstige Innenumformung des Querträgers gebildet sein. Es ist aber auch möglich, dass das Aufnahmeteil zum Querträger hin bewegt wird, was bei diesem eine Umformung bewirkt und somit die Umformungspartie geschaffen ist.

Weiterhin ist es vorteilhaft, wenn die Umformungspartie durch einen in die Durchtrittsöffnung vorstehenden Armkörper oder Bügelkörper gebildet ist. Der Armkörper oder Bügelkörper kann beispielsweise durch Ausstanzen oder eine sonstige schneidende Bearbeitung, zum Beispiel Laserschneiden oder dergleichen, aus einem Grundkörper des Aufnahmeteils gebildet sein. Bevorzugt bleibt der Armkörper oder Bügelkörper sozusagen stehen, wenn die Durchtrittsöffnung hergestellt wird. Der Armkörper kann beispielsweise frei zum Bolzenkopf vorstehen und diesen so entgegen der Steckachsrichtung fixieren. Der Armkörper kann federnd nachgiebig sein. Der Bügelkörper kann den Bolzenkopf übergreifen oder überspannen und somit den Bolzenkopf entgegen der Steckachsrichtung fixieren.

Zweckmäßig ist es, wenn die Durchtrittsöffnung für den mindestens einen Bolzen durch eine schneidende oder fräsende Bearbeitung eines Grundkörpers des Aufnahmeteils hergestellt ist. Ein zur Herstellung der Umformungspartie geeigneter Abschnitt des Grundkörpers im Innenquerschnitt der Durchtrittsöffnung bleibt dabei stehen. Vorteilhaft ist die Umformungspartie durch einen Abschnitt des Aufnahmeteils gebildet, der bei einer schneidenden oder fräsenden Bearbeitung eines Grundkörpers des Aufnahmeteils zur Herstellung der Durchtrittsöffnung stehen bleibt. Somit ist also mit diesem Abschnitt ein Material oder ein Körper vorhanden, der zu der Umformungspartie umgeformt werden kann, beispielsweise zu dem bereits erwähnten Armkörper oder Bügelkörper.

Bevorzugt ist es, wenn der Querträger eine von dem Aufnahmeteil begrenzte Durchtrittsöffnung durchdringt.

Das Aufnahmeteil kann beispielsweise eine Aufnahmehülse oder einen sonstigen Rohrkörper aufweisen oder dadurch gebildet sein die Aufnahmehülse oder der Rohrkörper ist vom Querträger durchdrungen.

Beispielsweise ist das Aufnahmeteil in der Art einer Manschette ausgestaltet oder bildet eine Manschette.

Weiterhin ist es zweckmäßig, wenn das Aufnahmeteil an einem Halterbereich des Querträgers formschlüssig gehalten ist. Der formschlüssige Halt kann beispielsweise in einer Längserstreckungsrichtung oder quer zu einer Längserstreckungsrichtung, beispielsweise als Verdrehsicherung einer Längsachse des Querträgers, vorteilhaft sein.

Neben einem einteiligen Halter oder einteiligen Aufnahmeteil, beispielsweise der vorgenannten Hülse oder Manschette, kommen aber auch mehrteilige Bauformen in Betracht.

Beispielsweise hat der Halter neben dem Aufnahmeteil noch ein Schließteil, die insgesamt eine als Durchtrittsöffnung für den Querträger ausgestaltete Querträgeraufnahme begrenzen und miteinander verbunden sind. Diese Verbindung kann beispielsweise eine Steckverbindung sein. Bevorzugt ist es, wenn das Aufnahmeteil und das Schließteil formschlüssig miteinander verbunden sind. Es ist ferner möglich, dass das Aufnahmeteil und das Schließteil durch einen Stoffschluss, beispielsweise eine Klebeverbindung und/oder eine Schweißverbindung, miteinander verbunden sind. Auch eine Verschraubung der beiden Komponenten, des Aufnahmeteils und des Schließteils, ist vorteilhaft möglich.

Eine in der Zeichnung dargestellte Ausführungsform sieht beispielsweise Halterelemente vor, die sandwichartig am Querträger angeordnet sind und somit von beiden Seiten her die Durchtrittsöffnung begrenzen. Eines der Halterelemente bildet ein Aufnahmeteil.

Besonders bevorzugt ist eine Umformung des Querträgers im Bereich des Halters um dadurch das Aufnahmeteil und das Schließteil aneinander zu fixieren. Beispielsweise können das Aufnahmeteil und das Schließteil eine Verzahnung aufweisen, die durch eine Innenumformung, insbesondere eine Innenhochdruckumformung, des Querträgers einen festen, unlösbaren Halt aneinander aufweisen.

Es ist beispielsweise möglich, dass das Schließteil und das Aufnahmeteil seitliche Konturen, zum Beispiel Seitenkanten, haben, die zu einer Umformung oder Verformung des Querträgers bei einer Innenumformung oder Außenumformung führen. Somit sind das Schließteil und das Aufnahmeteil zum Beispiel in Längsrichtung des Querträgers am Längsträger formschlüssig gehalten.

Es ist auch möglich, dass dadurch eine Verdrehsicherung realisiert ist, indem nämlich beispielsweise eine Seitenkante des Schließteils und/oder des Aufnahmeteils eine Verdrehsicherungskontur aufweist, die in Eingriff mit einer Verdrehsicherungskontur des Querträgers gelangt. Diese Verdrehsicherungskontur ist beispielsweise durch eine Innenumformung oder Außenumformung des Querträgers gebildet.

Weiterhin ist es möglich, dass der Querträger durch eine Umformung die Umformungspartie zur Sicherung des mindestens einen Bolzens bildet, was gleichzeitig dazu führt, dass der an dem Aufnahmeteil in der Durchtrittsöffnung gehaltene Bolzen formschlüssig am Querträger anliegt. Somit ist gleichzeitig der Querträger formschlüssig bezüglich des Bolzens und letztlich auch bezüglich des Aufnahmeteils gehalten.

Eine Verdrehsicherung kann auch beispielsweise durch die nachfolgende Maßnahme erzielt werden:
Das Anbauteil weist zweckmäßigerweise eine Formschlussaufnahme zur formschlüssigen Aufnahme des Querträgers auf. Beispielsweise hat die Formschlussaufnahme eine im Querschnitt U-förmige Gestalt. Die Aufnahme oder Formschlussaufnahme kann beispielsweise in der Art eines Aufnahmemauls ausgestaltet sein.

Die Anordnung sieht dann vorteilhaft vor, dass der Querträger mit einer Seite in die Formschlussaufnahme des Anbauteils eingreift und sich an der gegenüberliegenden oder entgegengesetzten Seite des Querträgers der Bolzenkopf abstützt.

Vorteilhaft ist weiterhin, wenn der mindestens eine Bolzen sozusagen aus einem Innenraum des Aufnahmeteils nach außen vorsteht.

Bevorzugt ist, dass der Bolzenkopf zwischen dem Querträger und dem Aufnahmeteil sandwichartig geklemmt ist. Beispielsweise ist der Querträger durch eine Innenumformung umgeformt, sodass er sich an den Bolzenkopf anpasst und somit die Umformungspartie bildet. Der Bolzenkopf wird in diesem Fall entgegen der Steckachsrichtung vom Querträger gehalten. Es ist aber auch möglich, dass eine Anordnung bestehend aus Aufnahmeteil und Bolzenkopf zum Querträger hin bewegt wird, beispielsweise durch eine Bewegung in der Art einer Pressung, sodass der Bolzenkopf an dem Querträger anliegt und den Querträger zudem umformt.

Zweckmäßigerweise ist vorgesehen, dass sich das Anbauteil an dem Aufnahmeteil abstützt. Insbesondere sind Formschlusskonturen zwischen Anbauteil und Aufnahmeteil vorgesehen, sodass diese formschlüssig aneinander abstützbar sind. Beispielsweise kann das Anbauteil eine Aufnahme, insbesondere eine U-förmige Aufnahme für das Aufnahmeteil des Halters aufweisen.

Vorteilhaft ist es, wenn der mindestens eine Bolzen, insbesondere dessen Bolzenkopf, durch eine Innenumformung und/oder eine Außenumformung des Querträgers kraftschlüssig und/oder formschlüssig bezüglich des Aufnahmeteils fixiert ist. Insbesondere ist es vorteilhaft, eine Innenhochdruckumformung beim Querträger vorzunehmen, um dadurch den Bolzenkopf am Aufnahmeteil zu fixieren.

Das Anbauteil kann beispielsweise einen Träger für ein Lager zum Lagern des Kupplungsarms zwischen einer Gebrauchsstellung und einer Nichtgebrauchsstellung aufweisen oder bilden. Bevorzugt ist es, wenn ein derartiges Lager, beispielsweise ein Schwenklager und/oder Schiebelager, lösbar an dem Anbauteil befestigbar ist, beispielsweise verschraubt.

Weiterhin ist es möglich, dass das Anbauteil eine Aufnahme zur lösbaren Befestigung des Kupplungsarms bildet oder aufweist. Die Aufnahme kann beispielsweise eine Steckaufnahme aufweisen oder bilden. Insbesondere kann eine Steckhülse zum Einstecken oder Anstecken durch das Anbauteil gebildet sein oder am Anbauteil angeordnet sein.

Es ist weiterhin möglich, dass das Anbauteil eine Montagebasis zum ortsfesten Befestigen des Kupplungsarms darstellt. Es ist sogar möglich, dass der Kupplungsarm einstückig mit dem Anbauteil ist oder dass das Anbauteil einstückig den Kupplungsarm bereitstellt.

An dem Kupplungsarm ist beispielsweise ein Kuppelkörper, insbesondere eine Kupplungskugel angeordnet. Es ist aber auch möglich, dass der Kupplungsarm beispielsweise eine Aufnahmehülse zum Einstecken oder Anstecken eines Lastenträgers bereitstellt. Auch eine sonstige Aufnahmehalterung zur Befestigung eines Lastenträgers kann am Kupplungsarm vorgesehen sein.

Vorteilhaft ist vorgesehen, dass das Anbauteil und das Aufnahmeteil aus unterschiedlichen Materialien sind. Zweckmäßig ist beispielsweise ein Schmiedebauteil als Anbauteil und/oder als Aufnahmeteil. Somit können beispielsweise ferritisch-perlitische Stähle oder bainitische Stähle bei dem Anbauteil und/oder Aufnahmeteil verwendet werden. Diese lassen sich nicht oder nur schwer stoffschlüssig mit anderen Komponenten verbinden, sodass die Verbindung mit dem mindestens einen Bolzen, insbesondere einem Schraubbolzen oder einer Schlossschraube, besonders vorteilhaft ist.

Es sei erwähnt, dass vorteilhaft ein Bolzenkopf eines Bolzens im Zusammenhang mit einer erfindungsgemäßen Anhängekupplung einen größeren Durchmesser aufweist als der Bolzenschaft. Besonders bevorzugt ist es, wenn der Bolzenkopf beispielsweise pilzförmig oder tellerförmig ist.

Nachfolgend werden Ausführungsbeispiele der Erfindung anhand der Zeichnung erläutert. Es zeigen:
- Figur 1: eine perspektivische Schrägansicht einer Anhängekupplung von schräg oben, von der in
- Figur 2: ein Detail dargestellt ist, das in
- Figur 3: von der entgegengesetzten Seite her dargestellt ist,
- Figur 4: eine Explosionsdarstellung der Anordnung gemäß Figur 3,
- Figur 5: das Detail gemäß Figur 3, 4 von oben,
- Figur 6: eine Schnittdarstellung durch das Detail gemäß Figur 5 entlang einer Schnittlinie A-A,
- Figur 7: die Anhängekupplung entsprechend den Detaildarstellungen 2, 3 von hinten her gesehen (mit einer Blickrichtung auf ein Heck eines Kraftfahrzeugs),
- Figur 8: einen Schnitt entlang einer Schnittlinie B-B durch die Anordnung gemäß Figur 8,
- Figur 9: die Trägeranordnung der Anhängekupplung gemäß der vorstehenden Figuren in schematischer Darstellung während der Herstellung,
- Figur 10: eine weitere Anhängekupplung in Explosionsdarstellung, von der in
- Figur 11: ein mittlerer Abschnitt mit Halter mit einer Blickrichtung von hinten auf ein Heck eines Kraftfahrzeugs von schräg oben und in
- Figur 12: von schräg oben mit einer Blickrichtung in Fahrtrichtung nach hinten bezüglich eines nicht dargestellten Kraftfahrzeugs dargestellt ist,
- Figur 13: eine perspektivische Schrägansicht einer weiteren Anhängekupplung von hinten oben mit einer Blickrichtung auf ein Heck eines Kraftfahrzeugs, die in
- Figur 14: von schräg oben mit einer Blickrichtung in Fahrtrichtung nach hinten bezüglich eines nicht dargestellten Kraftfahrzeugs dargestellt ist,
- Figur 15: eine Frontalansicht auf einen mittleren Abschnitt der Anhängekupplung von hinten mit Blickrichtung auf ein Heck des Kraftfahrzeugs,
- Figur 16: ein Detail D aus Figur 15 und
- Figur 17: einen Schnitt entlang einer Schnittlinie C-C durch die Anordnung gemäß Figur 15.

In der nachfolgenden Beschreibung der Ausführungsbeispiele sind teilweise gleiche oder gleichartige Komponenten vorhanden, die üblicherweise mit denselben Bezugsziffern versehen sind, somit also nur einmal erzeugt werden müssen. Insoweit Komponenten gleichartig sind, jedoch Unterschiede aufweisen, sind Bezugsziffern verwendet, die sich um jeweils 100 voneinander unterscheiden.

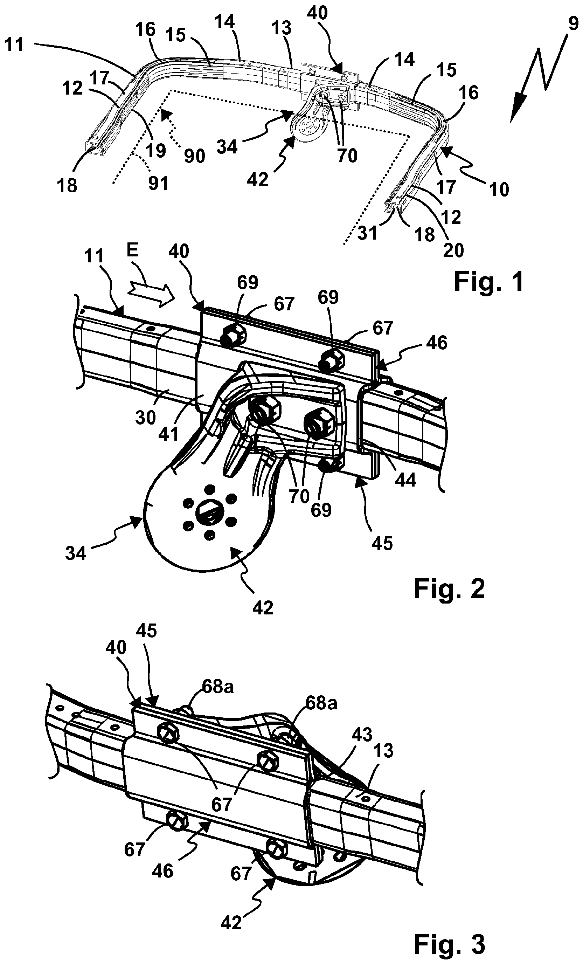

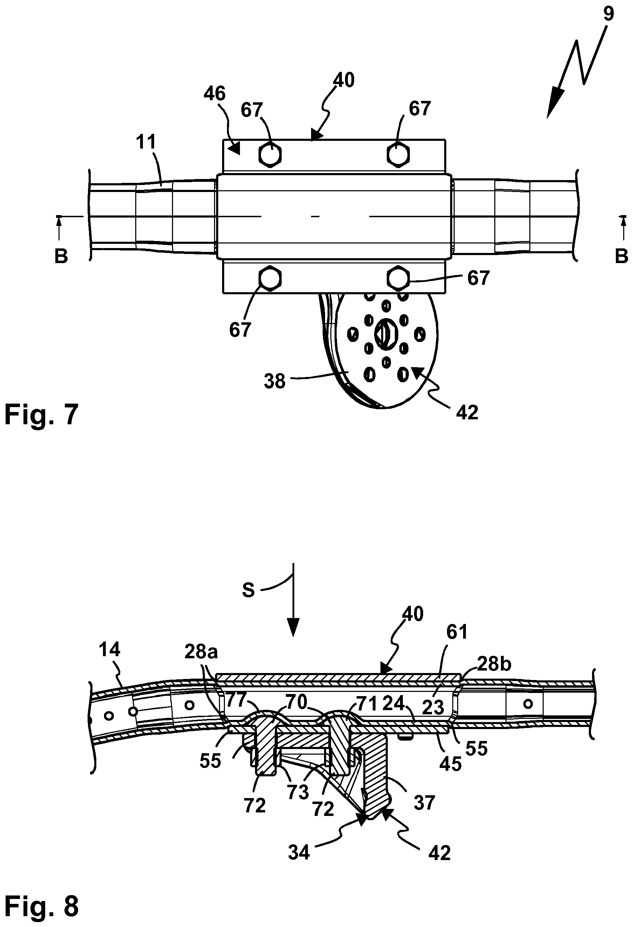

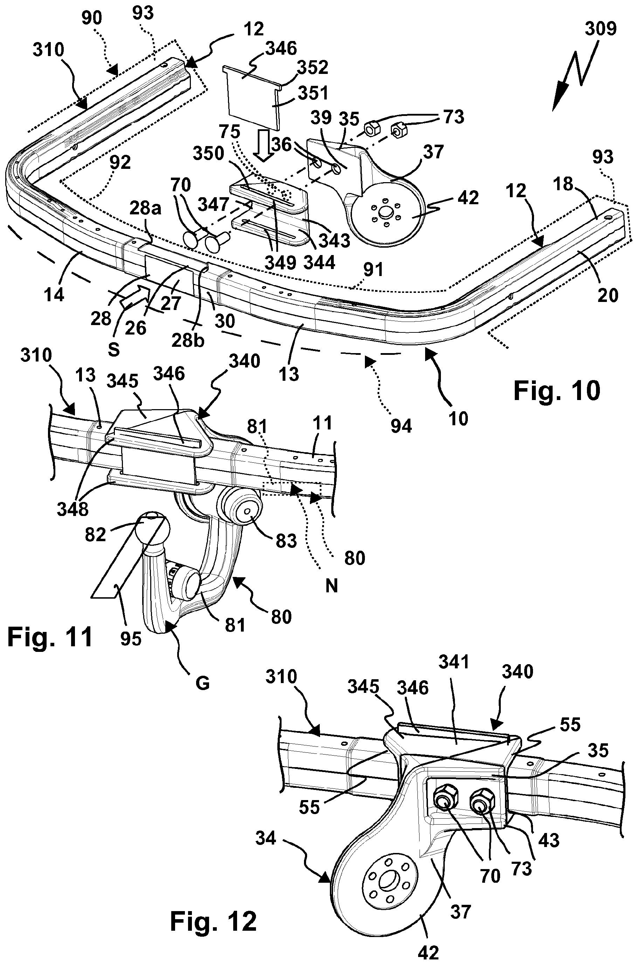

Eine Anhängekupplung 9 gemäß Figuren 1-9 sowie eine Anhängekupplung 309 gemäß Figuren 10-12 weisen eine Trägeranordnung 10 mit einem Querträger 11 auf, der sich im an einem Kraftfahrzeug 90 montierten Zustand entlang eines Hecks 91 des Kraftfahrzeugs 90 erstreckt. Der Querträger 11 ist beispielsweise zwischen einer Karosserie 92 des Kraftfahrzeugs 90 und einem Stoßfänger 94 aufgenommen.

Von dem Querträger 11 abstehende Seitenträger 12 erstrecken sich im Wesentlichen in Fahrzeuglängsrichtung des Kraftfahrzeugs 90. Beispielsweise stehen die Seitenträger 12 etwa rechtwinkelig oder in einem Winkel von 80-110° von dem Querträger 11 ab. Die Seitenträger 12 sind beispielsweise in Seitenträgeraufnahmen 93 am Kraftfahrzeug 90, beispielsweise als Bestandteile der Karosserie 92, aufgenommen und gehalten. Beispielsweise sind die Seitenträgeraufnahmen 93 seitlich an der Karosserie 92 vorgesehen oder erstrecken sich zwischen dem Stoßfänger 94 und der Karosserie 92. Die Seitenträgeraufnahmen 93 können aber auch beispielsweise an einer Crashbox des Kraftfahrzeugs 90 angeordnet sein. Eine Außenumfangskontur der Seitenträger 12 ist an die Innenumfangskontur oder Aufnahmekontur der Seitenträgeraufnahmen 93 angepasst.

Der Querträger 11 weist einen Mittelabschnitt 13 auf, an welchem ein Halter 40 oder 340 (bei der Anhängekupplung 309) gehalten ist, der einen Kupplungsarm 80 trägt. Der Kupplungsarm 80 könnte nun fest am Halter 40, 340 befestigt sein, ist jedoch im vorliegenden Fall schwenkbar bezüglich des Halters 40, 340 gelagert.

Beim Halter 40 sind der Kupplungsarm 80 sowie die zugehörige Lagerung nicht dargestellt, jedoch ein Halteabschnitt 42, an dem der Kupplungsarm 80 montierbar ist, wie nachfolgend noch deutlich wird.

Möglich wäre auch eine lösbare Verbindung zwischen Kupplungsarm und Halter, beispielsweise anhand einer Steckverbindung. Im Falle einer beweglichen Lagerung oder einer Steckverbindung ist eine Fixiereinrichtung oder Verriegelungseinrichtung zum Fixieren oder Verriegeln des Kupplungsarms am Halter bei einer erfindungsgemäßen Anhängekupplung vorteilhaft.

Beispielsweise kann der Kupplungsarm 80 zwischen einer nach hinten vor das Heck 91 vorstehenden Gebrauchsstellung G, in welcher er zum Anhängen eines schematisch dargestellten Anhängers 95 oder Tragen eines Lastenträgers (nicht dargestellt) positioniert ist, und einer näher zum Heck 91 hin verstellten Nichtgebrauchsstellung N, die nicht zum Tragen eines Lastenträgers oder Anhängen eines Anhängers geeignet ist, verstellt werden. In der Nichtgebrauchstellung N ist der Kupplungsarm 80 beispielsweise unterhalb des Stoßfängers 94 oder zweckmäßigerweise zwischen dem Stoßfänger 94 und dem Heck 91 des Kraftfahrzeugs 90 positioniert. Zweckmäßigerweise liegt ein Armabschnitt 81 des Kupplungsarms 80 am Querträger 11 an oder verläuft im Wesentlichen parallel zu diesem.

Der Kupplungsarm 80 hat an einem freien Endbereich des Armabschnitts 81 einen Kuppelkörper 82, beispielsweise eine Kupplungskugel oder ein sonstiges Kupplungsstück, das zur Befestigung eines Anhängers oder Lastenträgers geeignet ist. Dort könnte aber auch ein Steckvorsprung oder eine Steckaufnahme, insbesondere für einen Lastenträger vorgesehen sein. Der andere Endbereich des Armabschnitts 81 ist mit einem Lager 83 verbunden, das am Halter 40, 340 befestigt ist und die Verstellung des Kupplungsarms 80 zwischen der Gebrauchsstellung G und der Nichtgebrauchstellung N ermöglicht.

Bei der Anhängekupplung 9, 309 ist nur jeweils ein einziger Halter und ein einziger Kupplungsarm vorgesehen. Dies soll allerdings nicht einschränkend verstanden werden. Bei einer erfindungsgemäßen Anhängekupplung könnten durchaus auch beispielsweise zwei Halter mit Kupplungsarmen vorgesehen sein, beispielsweise wenn sie zum Tragen eines Lastenträgers dient, der dann mit zwei Befestigungsarmen an den Kupplungsarmen befestigbar ist.

Der Halter 40, 340 ist etwa quer mittig am Querträger 11 angeordnet nämlich an einem Mittelabschnitt 13 des Querträgers 11. Seitlich neben dem Mittelabschnitt 13 erstrecken sich Krümmungsabschnitte 14 sowie Seitenabschnitte 15, die quer außen in Bogenabschnitte 16 übergehen. Die Bogenabschnitte 16 gehen in Seitenträgerabschnitte 17 über, die die Seitenträger 12 bilden. Mithin ist also die Trägeranordnung 10 so ausgestaltet, dass sie integral den Querträger 11 und die Seitenträger 12 bildet. Denkbar wäre aber auch eine alternative Ausführungsform, bei der an einem Querträger vom Querträger separate Bauteile bildende Seitenträger montiert oder in sonstiger Weise befestigt sind, beispielsweise verschweißt, verschraubt oder beides, wie beispielweise bei der später noch erläuterten Anhängekupplung 209.

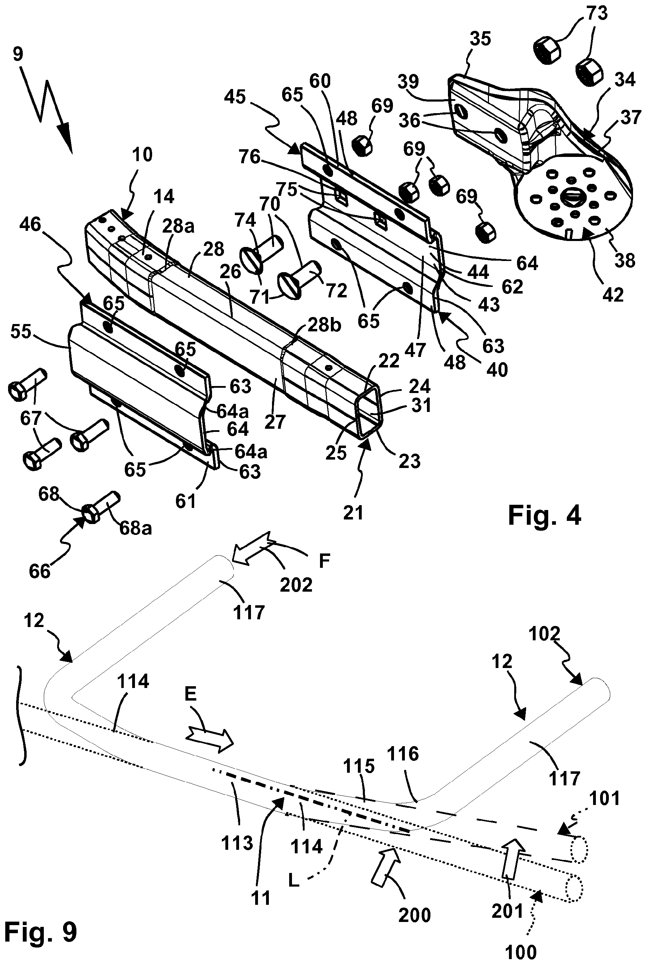

Ein mögliches, in Figur 9 schematisch dargestelltes Herstellungskonzept der Trägeranordnung 10 sieht vor, dass aus einem Trägerrohr 100, beispielsweise einem im Querschnitt runden Rohr (andere Geometrien sind ohne weiteres möglich) die Grundkonturen der Abschnitte 13-17 geformt werden. Beispielsweise wird im Rahmen einer Außenumformung 200 zunächst von einem zur Ausbildung des Mittelabschnitts 13 vorgesehenen Grund-Mittelabschnitt 113 ein Grund-Krümmungsabschnitt 114 zur Bildung des Krümmungsabschnitts 14 weg gebogen. Vom Grund-Krümmungsabschnitt 114 steht ein zur Ausbildung des Seitenabschnitts 15 vorgesehener Grund-Seitenabschnitt 115 ab. Dadurch entsteht ein Trägerrohr 101.

In einem anschließenden Schritt einer Außenumformung 201 werden dann die Seitenträger 12 gebildet, das heißt eine Basis für die Bogenabschnitte 16 bildende Grund-Bogenabschnitte 116 seitlich neben den Grund-Seitenabschnitten 115 ausgebildet. Von den Grund-Bogenabschnitten 116 erstrecken sich dann Grund-Seitenträgerabschnitte 117 weg, die eine Basis für Seitenträgerabschnitte 17 bilden. Die Grund-Seitenträgerabschnitte 117 stehen winkelig vom Grund-Mittelabschnitt 113 bzw. den Grund-Seitenabschnitten 115 ab. Die Grund-Seitenträgerabschnitte 117 bilden die Basis für die Seitenträger 12.

Im Ergebnis ist aus dem Trägerrohr 100 ein mit Krümmungsabschnitten versehenes und/oder an die Umfangskontur des Kraftfahrzeugs 90 bzw. der Karosserie 92 angepasstes Trägerrohr 102 durch eine entsprechende Umformung gebildet.

Auf diesem Wege wird eine belastbare, homogene Trägeranordnung für die Anhängekupplung gebildet. Es versteht sich, dass die obige exemplarische Vorgehensweise auch bei anderen Geometrien eines Trägerrohrs möglich ist, d.h. dass ein Rohling oder Trägerrohr auch in andere, an eine jeweilige Fahrzeugkarosserie eines Kraftfahrzeugs angepasste Grundkontur gebracht werden kann, bevor die nachfolgend erläuterten ebenfalls erfindungsgemäßen Montageschritte oder Herstellungsschritte erfolgen.

Die Halter 40, 340 weisen Grundkörper 41, 341 auf, an denen eine Durchtrittsöffnung 43, 343 zumindest jeweils partiell vorgesehen ist und/oder die die Durchtrittsöffnung 43, 343 begrenzen.

An dem Grundkörper 40, 341 ist ein Haltekörper 42, beispielsweise in der Art eines Haltearms oder eines vorstehenden Trägers, gehalten, der das Lager 83 hält oder trägt. Der Haltekörper 42 ist zumindest partiell vorzugsweise plattenartig.

Das Lager 83 ist zweckmäßigerweise am Haltekörper 42 lösbar befestigbar, beispielsweise verschraubbar. Dies ermöglicht beispielsweise die Montage des Halters 40, 340 an der Trägeranordnung 10, bevor die weiteren Komponenten der Anhängekupplung 9, 309 montiert werden, nämlich das Lager 83 mit dem Kupplungsarm 80 oder beispielsweise auch ein Antrieb für eine Verriegelungseinrichtung und/oder eine Verstellung des Kupplungsarms 80 zwischen der Gebrauchsstellung G und der Nichtgebrauchstellung N.

Der Haltekörper 42 umfasst beispielsweise einen Befestigungsabschnitt 35, an welchem Montageaufnahmen 36 für Schraubbolzen oder sonstige Befestigungsorgane vorgesehen sind. Von dem Befestigungsabschnitt 35 steht ein Armabschnitt 37 ab, welcher seinerseits wiederum einen Montageabschnitt 38 trägt oder aufweist. Der Montageabschnitt 38 ist beispielsweise als eine Platte ausgestaltet oder stellt eine plattenförmige Montagefläche bereit. Beispielsweise ist am Montageabschnitt 38 das Lager 83 befestigt, insbesondere verschraubt.

Der Haltekörper 42 hat beispielsweise im Bereich des Befestigungsabschnitts 35 eine Stützfläche 39, insbesondere eine Planfläche. Die Planfläche 39 eignet sich beispielsweise zur Montage an einer der Seitenwände 22-25 des Querträgers 11 oder wie später noch deutlich wird eines Querträgers 211. Anstelle der planen Stützfläche 39 könnte aber auch eine nicht ebene Aufnahmekontur vorgesehen sein, beispielsweise passend zu einem runden Profilkörper oder polygonalen Profilkörper eine entsprechend runde oder polygonale Aufnahmekontur.

Die Halter 40, 340 sind zweiteilig. Die Halter 40, 340 weisen ein Aufnahmeteil 45, 345 auf, an welchem eine Querträgeraufnahme 44 vorgesehen ist. Das Aufnahmeteil 45, 345 ist durch ein Schließteil 46, 346 verschlossen, so dass die Durchtrittsöffnung 43 durch das Aufnahmeteil 45, 345 und das Schließteil 46, 346 begrenzt ist. Der Querträger 11 erstreckt sich durch die Durchtrittsöffnung 43 hindurch.

Die Durchtrittsöffnung 43, 343 ermöglicht es, dass die Halter 40, 340 beispielsweise durch eine Steckbewegung entlang einer Einsteckrichtung E am Querträger 11, nämlich einem Halterbereich 28, befestigt werden können.

In die Querträgeraufnahme 44 kann der am Mittelabschnitt 13 vorgesehene Halterbereich 28 eingesteckt werden. Nun wäre es möglich, dass der Halter 40, 340 an der fertigen Trägeranordnung 10 gemäß beispielsweise Figur 9 befestigt wird. Dieses Konzept ist insbesondere bei dem Halter 40 leicht möglich, der eine Verschraubung aufweist.

Ein vorteilhaftes Konzept sieht jedoch die nachfolgende Vorgehensweise vor. Der Grund-Mittelabschnitt 113 des Trägerrohrs 102 wird schematisch dargestellt in Figur 9 entlang einer Steckachse oder Steckrichtung E in Eingriff mit der Querträgeraufnahme 44 des Aufnahmeteils 45, 345 gebracht. Dann wird das Aufnahmeteil 45, 345 verschlossen, nämlich mit dem Schließteil 46, 346. Der sozusagen einen Grund-Querträger bereitstellende Rohling oder das Trägerrohr 101 ist dann quer zu seiner Längsrichtung L (im montierten Zustand in Querrichtung des Fahrzeugs 90 verlaufend) in der Durchtrittsöffnung 43 fixiert, kann also in Fahrzeuglängsrichtung des Kraftfahrzeugs 90 nicht mehr aus der Durchstecköffnung 43 heraus gelangen.

Der Grund-Mittelabschnitt 13, der später den Halterbereich 28 ausbildet, liegt dabei an einem Boden 47, 347 der Querträgeraufnahme 44 an oder dem Boden 47, 347 gegenüber. Vom Boden 47, 347 weg erstrecken sich Seitenschenkel 48, 348, die sozusagen klammerartig eine Oberseite sowie eine Unterseite des Trägerrohrs 102 im Bereich seines Mittelabschnitts 113 abstützen oder abstützen können.

Dem Boden 347 gegenüberliegend ist beim Halter 340 das Schließteil 346 vorgesehen, das mit einem Steckabschnitt 351 durch Durchstecköffnungen 349 an den beiden Seitenschenkeln 348 durchgesteckt ist und sich an beiden Seitenschenkeln 348 abstützt. Die Durchstecköffnungen 349 bilden Widerlager 350 des Aufnahmeteils 345, an denen das Schließteil 346 abgestützt ist. Das Schließteil 346 ist beispielsweise in der Art eines Schiebers oder Riegels ausgestaltet, der durch die Durchstecköffnungen 349 durchgesteckt ist.

Bevorzugt sind Stützvorsprünge 352 vorgesehen, die seitlich vor den Steckabschnitt 351 vorstehen. Die Stützvorsprünge 352 stützen sich beispielsweise an einer zu der Querträgeraufnahme 44 entgegengesetzten Seitenfläche, zum Beispiel eine Oberseite, eines der Seitenschenkel 348 ab, beispielsweise des oberen Seitenschenkels 348. Somit ist das Schließteil 346 am Aufnahmeteil 345 für den anschließenden Bearbeitungsschritt, insbesondere Umformungsschritt, optimal gehalten.

Der Querträger 11 ist beispielsweise als ein Profilkörper 21 ausgestaltet. Der Profilkörper 21 weist eine obere Seitenwand 22, eine untere Seitenwand 23 sowie bezüglich der Fahrtrichtung eine vordere Seitenwand 24 und eine hintere Seitenwand 25 auf. Zwischen den Seitenwänden 22-25 können Rundungen vorgesehen sein. Es sei betont, dass der rechteckige Querschnitt des Profilkörpers 21 eine Option darstellt, d.h. dass selbstverständlich auch andere Profile, wie beispielsweise runde Profile oder dergleichen alternativ möglich sind.

Bei der Innenumformung 202 wird beispielsweise ein Fluid F, insbesondere Wasser, in den jeweiligen Innenhohlraum 31 des Trägerrohrs 102 eingepresst. Dies ist beispielsweise als sogenanntes Hydroforming bekannt.

Auf diesem Wege werden beispielsweise an freien Enden 18 der Seitenträger 12 Verjüngungen 19 ausgebildet, so dass diese freien Enden 18 optimal in die Seitenträgeraufnahmen 93 hinein passen. Weiterhin kann das Profil insbesondere im Bereich der freien Enden 18 ausgeprägt werden, zum Beispiel in der Art einer Profil-Vertiefung 20 oder mehrerer entsprechender Profilvertiefungen. Beispielsweise ist eine nach innen in Richtung des Innenhohlraums 31 sich erstreckende Vertiefung vorgesehen, um jedenfalls die Querschnittsfläche der freien Enden 18 der Querschnittsfläche des Trägerrohrs 102 zu verkleinern.

In gleicher Weise kann aber auch beispielsweise eine Querschnittsaufweitung 30 im Bereich des Halters 40, 340 erfolgen, sodass der Halterbereich 28 ausgebildet ist. Der Grund-Mittelabschnitt 113 des Trägerrohrs 102 wird im Rahmen der Innenumformung sozusagen aufgeweitet oder aufgebläht, so dass er sich an den Innenquerschnitt der Durchtrittsöffnung 43 formschlüssig anlegt.

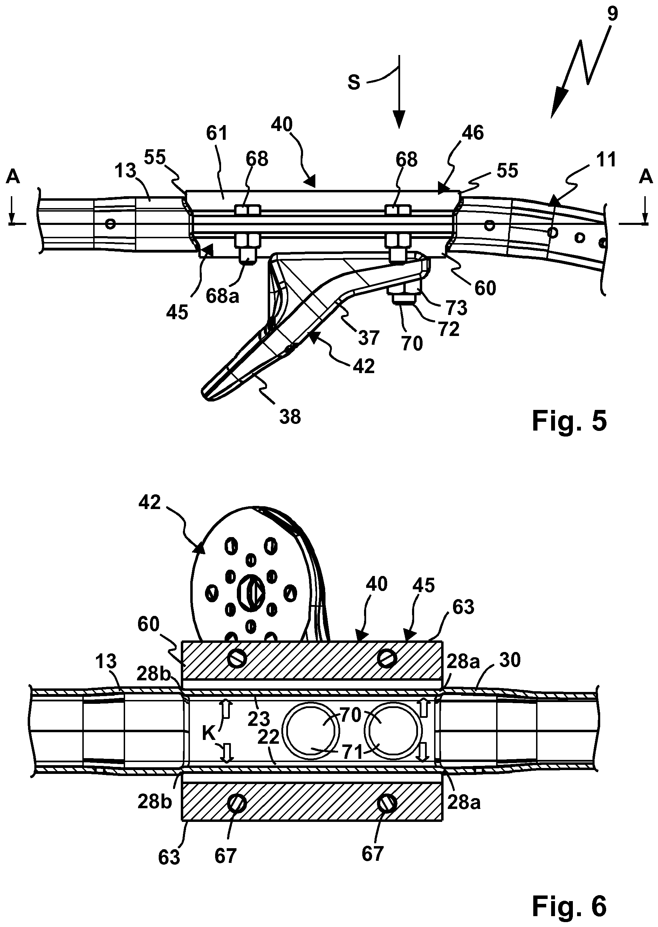

An zueinander winkeligen Seitenwänden des Querträgers 11 bilden sich dabei beispielsweise eine Vertiefung 26 sowie eine Vertiefung 27, in denen die entsprechenden Stützkonturen oder Stützflächen des Halters 40, 340 aufgenommen sind. Auch an den nicht in Figur 5 sichtbaren Seiten sind derartige Vertiefungen vorhanden, an denen sich entsprechende Stützflächen oder Stützkonturen des Halters 40, 340 abstützen.

Beispielsweise sind durch die Vertiefungen 26, 27 Stützkonturen, z.B. Seitenkanten 28a, 28b, gebildet, an denen sich Seitenkanten 55 der Halter 40, 340 abstützen können. Somit sind Verschiebesicherungskonturen gebildet, da nämlich die sich an den Seitenkanten 28 abstützenden Seitenkanten 55 eine Verschieblichkeit des Halters 40, 340 bezüglich der Längsrichtung L des Querträgers 11 unterbinden. Weiterhin sorgen die Verschiebesicherungskonturen vorteilhaft dafür, dass sich das Schließteil 346 vom Aufnahmeteil 345 nicht mehr lösen kann.

An dieser Stelle sei aber bemerkt, dass allein schon die polygonale Querschnittskontur der Durchtrittsöffnung 43 dafür sorgt, dass der daran formschlüssig anliegende Querträger 11 den Halter 40, 340 verdrehsicher bezüglich beispielsweise der Längsachse oder Längsrichtung L sichert.

Die Innenumformung 202 sorgt vorteilhaft dafür, dass vom Innenhohlraum 31 her eine Umformungskraft K auf die Seitenwände 22-25 wirkt, die den Profilkörper 21 an die Innenumfangskonturen der Querträgeraufnahmen 44, 344 optimal anpasst, so dass ein Formschluss zwischen einerseits dem Querträger 11 und andererseits der Querträgeraufnahme 44, 344 vorhanden ist.

Das Aufnahmeteil 45 des Halters 40 und das Schließteil 46 des Halters 40 werden von Halterelementen 60, 61 gebildet. Die Halterelemente 60, 61 könnte man auch als Klammerelemente bezeichnen, da sie den Querträger 11 von einander entgegengesetzten Seiten klammerartig umgreifen. Die Halterelemente 60, 61 sind weitgehend gleich ausgestaltet, sodass ein Gleichteilprinzip gegeben ist. Beispielsweise sind die Halterelemente 60, 61 in der Art von Halterplatten, jedoch mit einer Aufnahme oder Ausnehmung für den Querträger 11, ausgestaltet.

Die Halterelemente 60, 61 weisen einen Bodenabschnitt 62 sowie davon seitlich abstehenden Flanschabschnitte 63 auf. Die Flanschabschnitte 63 der einander gegenüberliegenden Halterelemente 60, 61 liegen mit Flachseiten insbesondere flächig aneinander an, was eine optimale Abstützung darstellt. Die Flanschabschnitte 63 sind mit Montageöffnungen 65 für Schrauben 67 einer Schraubenanordnung 66 versehen. Beispielsweise sind an jedem Flanschabschnitt 63 jeweils zwei oder weitere Montageöffnungen 65 vorgesehen, sodass jeder Flanschabschnitt 63 mit mindestens zwei Schrauben 67 mit dem gegenüberliegenden anderen Flanschabschnitt 63 verschraubt werden kann. Die Schrauben 67 stützen sich mit ihren Schraubenköpfen 68 am einen Flanschabschnitt 63 ab, während ihre Bolzenschäfte 68a die Montageöffnungen 65 durchdringen. Auf die Bolzenschäfte 68a sind jeweils Muttern 69 aufgeschraubt, die sich am andern Flanschabschnitt 63 abstützen.

Von den Flanschabschnitten 63 weg erstrecken sich schräge, an beispielsweise Krümmungsbereiche zwischen den Seitenwänden 22-25 des Querträgers 11 angepasste Abschnitte 64a, die in eine Bodenwand 64 eines jeweiligen Halterelements 60, 61 übergeht. Durch die muldenförmige Ausgestaltung der Abschnitte 64a und der Bodenwand 64 insgesamt sind durch die beiden einander gegenüberliegenden Halterelemente 60, 61 die Durchtrittsöffnung 43 und die Querträgeraufnahme 44 begrenzt.

An dieser Stelle sei erwähnt, dass anstelle der voneinander separaten Halterelemente 60, 61 auch ein beispielsweise rohrförmiger Haltekörper möglich ist, d.h. ein Körper, der den Querträger 11 vollständig umschließt und somit nicht durch Montageelemente, wie beispielsweise die Schrauben 67, verbundene Teilkörper umfassen muss. Insbesondere durch die Innenumformung 202 ist es ohne weiteres möglich, einen derartigen rohrförmigen Haltekörper, beispielsweise Hülsenkörper, auf das noch nicht fertig gestellte Profilrohr oder Trägerrohr 100 aufzustecken und anschließend durch die Innenumformung 202 dieses Trägerrohr 100 so aufzublähen oder auszudehnen, dass es sich an den Innenumfang dieses Hülsenkörpers oder rohrförmigen Haltekörpers anpasst. Vorteilhaft ist in diesem Zusammenhang selbstverständlich, dass der Hülsenkörper oder Rohrkörper, der anstelle der Halterelemente 60, 61 zum Einsatz kommen kann, grundsätzlich schon eine zu dem Außenumfang des Trägerrohrs 100 oder des fertig gestellten Querträgers 11 passenden Innenquerschnittskontur aufweist.

Prinzipiell wäre es zwar möglich, an der Trägeranordnung 10 unmittelbar den Haltekörper 42 und somit die Komponenten des Kupplungsarms 80 zu befestigen. Das nachfolgend erläuterte Konzept hat jedoch den Vorteil, dass unterschiedliche, insbesondere in Bezug auf ihr Material besonders geeignete, Anbauteile, nämlich beispielsweise der Haltekörper 42 als ein Anbauteil 34, an einer Trägeranordnung befestigbar sind.

Alternativ zum Haltekörper 42 könnte nach diesem Konzept beispielsweise auch ein Steckdosenhalter oder ein anderes Anbauteil, auch ein Stützkörper zum Abstützen des Stoßfängers 34 oder dergleichen andere Komponenten am Querträger 11 und/oder an einem der Seitenträger 12, insgesamt also der Trägeranordnung 10 befestigt werden.

Das Aufnahmeteil 45, 345 dient nämlich zum Halten von Bolzen 70, die sich mit Bolzenköpfen 71 an den Anbauteilen 45, 345 abstützen. Die Bolzen 70 stehen mit ihren Bolzenschäften 72 entlang einer Steckachsrichtung S vor die Aufnahmeteile 45, 345 vor, so dass an den Bolzenschäften 72 weitere Bauteile, nämlich beispielsweise das Anbauteil 34, ohne weiteres befestigbar sind.

Die Bolzen 70 durchdringen Durchtrittsöffnungen 75 an den Aufnahmeteilen 45, 345 und stehen mit ihren Bolzenschäften 72 vor diese Aufnahmeteile 45, 345 vor. Die Bolzenköpfe 71 stützen sich neben den Durchtrittsöffnungen 75 an den Aufnahmeteilen 45, 345 ab.

Die Bolzenschäfte 72 durchdringen die Montageaufnahmen 36 des Anbauteils 34, wobei auf ihre freien Endbereiche die Muttern 73 aufgeschraubt sind.

Die Bolzen 70 sind zweckmäßigerweise bezüglich der Steckachsrichtung S durch Umformungspartien 77 gesichert, sodass sie beispielsweise beim Aufschrauben von Muttern 73 auf ihre Bolzenschäfte 72 entgegen der Steckachsrichtung S nicht zurückweichen können.

Vorteilhaft ist es weiterhin, wenn die Bolzen 70 zudem noch durch Verdrehsicherungskonturen 74, 76 bezüglich der Aufnahmeteile 45, 345 verdrehgesichert sind, sich also nicht um ihre Längsachse oder die Steckachse S drehen können. Auch diese Maßnahme trägt dazu bei, dass die Muttern 73 leicht montierbar sind.

Die Umformungspartien 77 werden durch die bereits erläuterte Innenhochdruckumformung 202 gebildet, indem nämlich die Profilkörper 21 sozusagen aufgebläht werden, sodass sie sich an den Innenumfang der Durchtrittsöffnung 43 oder der Querträgeraufnahme 44 anpassen. Dabei werden auch die Seitenwände der Profilkörper 21 verformt, sodass sie sich vorteilhaft formschlüssig über die Bolzenköpfe 71 legen und dabei die Umformungspartien 77 ausbilden.

Vorteilhaft ist dabei auch ein Formschluss der Halter 40, 340 bezüglich des Querträgers 11 erzielt, so dass die Halter 40, 340 bezüglich einer Längsachse oder Längsrichtung L, aber auch quer dazu, nämlich bezüglich einer Schwenkbewegung um die Längsachse der Querträger 11, fixiert sind.

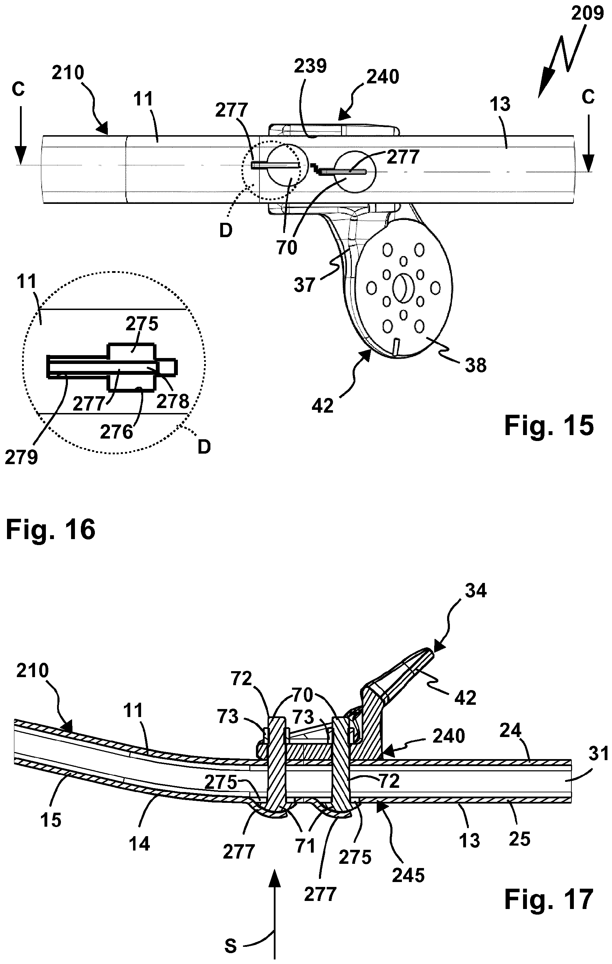

Es ist auch möglich, dass sozusagen die Trägeranordnung als solche oder ein Querträger derselben eine Verdrehsicherung und/oder eine Umformungspartie bereitstellen, was am Ausführungsbeispiel gemäß Figuren 15-17 im Zusammenhang mit einer Trägeranordnung 210 erläutert wird.

Bei der Trägeranordnung 210 sind ein Querträger 211 und Seitenträger 212 nicht aus einem Stück gefertigt, sondern als separate Bauteile. Die Seitenträger 212 weisen beispielsweise Halter 213 auf, in denen der Querträger 211 aufgenommen ist. Die Halter 213 haben beispielsweise gabelförmige oder U-förmige Aufnahmen 214, die den Querträger 211 aufnehmen und halten. Zwischen den Haltern 213 und dem Querträger 211 kann eine Schweißverbindung, Schraubverbindung oder dergleichen vorgesehen sein. Die Seitenträger 212 werden beispielsweise mit der Karosserie 92 seitlich verschraubt, wobei auch hier eine Unterbringung bzw. Befestigung in Seitenträgeraufnahmen 93 ohne weiteres möglich ist.

Der Querträger 211 kann als ein Umformteil ausgestaltet sein, beispielsweise durch eine Innenhochdruckumformung. Es ist aber auch möglich, dass der Querträger 211 ein Profilrohr oder Profilteil ist, das nicht von innen umgeformt ist.

Der Querträger 211 bildet ein Aufnahmeteil 245 für zur Befestigung des Anbauteils 34 dienende Bolzen 70. Die Bolzen 70 stützen sich mit ihren Bolzenköpfen 71 an einer Seitenwand des Querträgers 211 ab, beispielsweise der Seitenwand 25. Dort sind Durchtrittsöffnungen 275 vorgesehen, durch die die Bolzenschäfte 72 in den Innenhohlraum des ebenfalls als Profilkörper ausgestalteten Querträgers 211 vorstehen. Weiterhin durchdringen die Bolzenschäfte 72 die der Seitenwand 25 gegenüberliegende Seitenwand 24 und stehen dort zum Aufnahmeteil 34 vor. Das Aufnahmeteil 34 ist mit seinen Montageaufnahmen 36 auf die Bolzenschäfte 72 aufgesteckt und anschließend anhand der Muttern 73 verschraubt.

Die Verdrehsicherungskonturen 74 der Bolzen 70 sind beispielsweise Vierkant-Konturen oder sonstige polygonale Konturen. Beim Ausführungsbeispiel gemäß Figuren 10-12 ist beispielsweise keine derartige Verdrehsicherungskontur vorgesehen, was aber vorteilhaft auch möglich wäre. Bei der detaillierteren Darstellung gemäß Figuren 15-17 wird deutlich, dass als Verdrehsicherungskontur beispielsweise eine quadratische oder rechteckige Verdrehsicherungskontur vorteilhaft ist, die nämlich in eine korrespondierende, ebenfalls quadratische oder rechteckige Verdrehsicherungskontur 276 der Durchtrittsöffnungen 275 formschlüssig und somit verdrehgesichert passt.

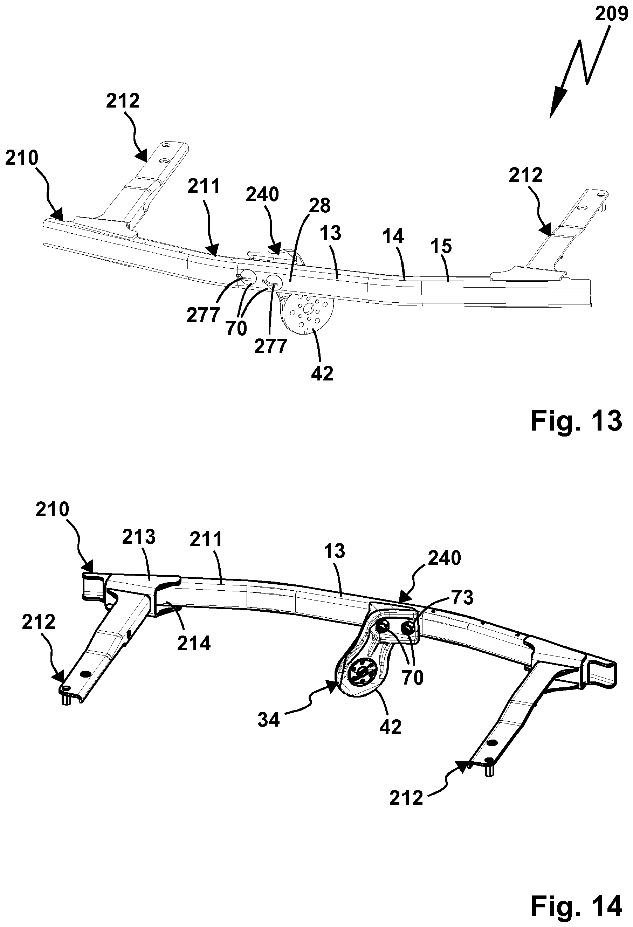

Weiterhin wird an diesem Ausführungsbeispiel der Figuren 15-17 auch deutlich, dass vorteilhaft eine Querschnittsfläche des Bolzenkopfes größer als eine Querschnittsfläche einer jeweiligen Verdrehsicherungskontur eines Bolzens ist. Es ist aber auch möglich, dass der Bolzenkopf nur partiell über die Verdrehsicherungskontur vorsteht, sodass er sich an dem Aufnahmeteil neben der Durchtrittsöffnung abstützen kann. Es versteht sich, dass diese Ausführungsform nicht auf das Ausführungsbeispiel der Figuren 15-17 beschränkt ist, sondern auch anderweitig eingesetzt werden kann, zum Beispiel bei den vorgenannten Varianten der Figuren 1-14.

Die Bolzenköpfe 71 sind durch Umformungspartien 277 bezüglich der Steckachsrichtung S verschiebegesichert. Die Umformungspartien 277 sind beispielsweise bei der Herstellung der Durchtrittsöffnungen 275 hergestellt, z.B. durch ein Ausstanzen oder eine sonstige schneidende oder fräsende Bearbeitung eines Grundkörpers des Querträgers 11.

Die Umformungspartien 277 sind beispielsweise als Armkörper 278 ausgestaltet, die in den Innenquerschnitt der Durchtrittsöffnungen 275 vorstehen. Die Armkörper 278 stehen zudem noch bis in eine Aussparung 279 vor, die sich von der Durchtrittsöffnung 275 weg erstreckt.

Die Arme oder Armkörper 278 können von der Durchtrittsöffnung 275 weg gebogen werden, bis die Durchtrittsöffnungen 275 zum Einstecken der Bolzen 70 bzw. deren Bolzenköpfe 71 ausreichend frei sind, um dann die Bolzen 70 in die Durchtrittsöffnungen 275 einzustecken. Sodann werden die Umformungspartien 277 wieder in den Bereich der Durchtrittsöffnungen 275 umgeformt, sodass sie die Bolzenköpfe 71 bezüglich der Steckachsrichtung S festlegen.

Die Aussparung 279 ermöglicht auch eine federnde Ausgestaltung der Armkörper 278, das heißt dass sie sich selbsttätig wieder in Richtung einer die Bolzenköpfe 71 abstützende Position zurück bewegen, wenn sie von den Durchtrittsöffnungen 275 weg ausgelenkt werden.

Vorteilhaft kann das Anbauteil 34 auch eine Formschlussaufnahme 239 anstelle oder in Ergänzung zu der Stützfläche 39 aufweisen. Die Formschlussaufnahme 239 ist beispielsweise in der Art eines Mauls ausgestaltet, ähnlich der Ausgestaltung des Aufnahmeteils 345. Beispielsweise kann die Formschlussaufnahme 239 Seitenschenkel in der Art der Seitenschenkel 348 aufweisen, die den Querträger 211 an seiner oberen und unteren Seitenwand 22, 23 abstützen.

Das Anbauteil 34 ist vorzugsweise ein Schmiedeteil, insbesondere aus einem hochfesten Stahl.

Es versteht sich, dass ein Halt in der Art der Formschlussaufnahme 239 auch im Zusammenhang mit den vorigen Ausführungsbeispielen vorteilhaft ist. So könnte beispielsweise die Formschlussaufnahme 239 das Aufnahmeteil 45, 345 maulartig oder gabelartig aufnehmen.

An dieser Stelle sei auch erwähnt, dass auch ein Aufnahmeteil eine Formschlussaufnahme oder einen Formschlussvorsprung aufweisen kann. Denkbar wäre beispielsweise eine Ausführungsform, bei der am Aufnahmeteil 45, 345 eine maulartige oder gabelartige Aufnahme für das Anbauteil 34 vorgesehen ist.

## Patentansprüche

1. Anhängekupplung für ein Kraftfahrzeug mit einer Trägeranordnung (10), die einen zur Anordnung an einem Heck eines Kraftfahrzeugs vorgesehenen Querträger (11) und einen an dem Querträger (11) angeordneten Halter (40) zum Halten eines Kupplungsarms (80) der Anhängekupplung aufweist, wobei der Kupplungsarm (80) zur Befestigung eines Anhängers oder eines Lastenträgers vorgesehen ist, wobei der Halter (40) mindestens einen Bolzen (70) umfasst, der in einer Steckachsrichtung (S) in eine Durchtrittsöffnung (75) eines Aufnahmeteils (45) eingesteckt ist und mit einem Bolzenkopf (71) an dem Aufnahmeteil (45) neben der Durchtrittsöffnung (75) abgestützt ist, **dadurch gekennzeichnet, dass** ein Bolzenschaft (72) des mindestens einen Bolzens (70) zur Befestigung eines Anbauteils (34), insbesondere eines Haltekörpers (42) für den Kupplungsarm (80), in der Steckachsrichtung (S) vor das Aufnahmeteil (45) vorsteht und ein Schraubgewinde zur Verschraubung des Anbauteils mit dem Bolzenschaft (72) aufweist oder eine Klemmbasis zur Verklemmung des Anbauteils (34) bildet, und dass der Bolzenkopf (71) durch eine Umformungspartie (77) entgegen der Steckachsrichtung (S) abgestützt ist und/oder der mindestens eine Bolzen (70) anhand mindestens einer Verdrehsicherungskontur (76) an der Durchtrittsöffnung (75) verdrehsicher gehalten (40) ist.

2. Anhängekupplung nach Anspruch 1, **dadurch gekennzeichnet, dass** der Bolzenschaft (72) ein Schraubgewinde und/oder mindestens eine insbesondere eine an dem Bolzenkopf (71) oder zwischen dem Bolzenkopf (71) und dem Bolzenschaft (72) angeordnete Verdrehsicherungskontur (76) aufweist und/oder der mindestens eine Bolzen (70) als eine Schlossschraube ausgestaltet ist.

3. Anhängekupplung nach Anspruch 1 oder 2, **dadurch gekennzeichnet, dass** der Querträger (11) oder ein Seitenträger (12) der Trägeranordnung (10) das Aufnahmeteil (45) bildet.

4. Anhängekupplung nach einem der vorhergehenden Ansprüche, **dadurch gekennzeichnet, dass** der mindestens eine Bolzen (70) einander gegenüberliegende Wände eines Profilkörpers der Trägeranordnung (10), insbesondere des Querträgers (11), durchdringt.

5. Anhängekupplung nach einem der vorhergehenden Ansprüche, **dadurch gekennzeichnet, dass** die Umformungspartie (77) einstückig durch den Querträger (11) gebildet ist.

6. Anhängekupplung nach einem der vorhergehenden Ansprüche, **dadurch gekennzeichnet, dass** die Umformungspartie (77) durch einen von dem Aufnahmeteil (45) separaten Umformkörper, insbesondere den Querträger (11) oder ein Profil des Querträgers (11), gebildet ist.

7. Anhängekupplung nach einem der vorhergehenden Ansprüche, **dadurch gekennzeichnet, dass** die Umformungspartie (77) durch einen in die Durchtrittsöffnung (75) vorstehenden Armkörper oder Bügelkörper gebildet ist.

8. Anhängekupplung nach einem der vorhergehenden Ansprüche, **dadurch gekennzeichnet, dass** die Durchtrittsöffnung (75) für den mindestens einen Bolzen (70) durch eine schneidende oder fräsende Bearbeitung eines Grundkörpers des Aufnahmeteils (45) hergestellt ist, wobei ein zur Herstellung der Umformungspartie (77) geeigneter Abschnitt des Grundkörpers im Innenquerschnitt der Durchtrittsöffnung (75) stehen bleibt.

9. Anhängekupplung nach einem der vorhergehenden Ansprüche, **dadurch gekennzeichnet, dass** der Querträger (11) eine von dem Aufnahmeteil (45) begrenzte Durchtrittsöffnung (43) durchdringt und/oder der Aufnahmeteil (45) eine insbesondere einstückige Aufnahmehülse für den Querträger (11) bildet.

10. Anhängekupplung nach einem der vorhergehenden Ansprüche, **dadurch gekennzeichnet, dass** das Aufnahmeteil (45) an einem Halterbereich (28) des Querträgers (11) formschlüssig gehalten ist.

11. Anhängekupplung nach einem der vorhergehenden Ansprüche, **dadurch gekennzeichnet, dass** der Halter (40) das Aufnahmeteil (45) und ein Schließteil aufweist, die eine als Durchtrittsöffnung (43) für den Querträger (11) ausgestaltete Querträgeraufnahme (11) begrenzen und miteinander verbunden sind, insbesondere formschlüssig und/oder stoffschlüssig und/oder anhand einer Verschraubung und/oder durch eine insbesondere durch den Bolzenkopf (71) bewirkte Umformung des Querträgers (11) im Bereich des Halters (40).

12. Anhängekupplung nach einem der vorhergehenden Ansprüche, **dadurch gekennzeichnet, dass** das Anbauteil (34) eine Formschlussaufnahme (239) zum formschlüssigen Aufnehmen des Querträgers (11) aufweist.

13. Anhängekupplung nach einem der vorhergehenden Ansprüche, **dadurch gekennzeichnet, dass** der Bolzenkopf (71) zwischen dem Querträger (11) und dem Aufnahmeteil (45) sandwichartig geklemmt ist und/oder dass das Anbauteil (34) an dem Aufnahmeteil (45) insbesondere formschlüssig abgestützt ist.

14. Anhängekupplung nach einem der vorhergehenden Ansprüche, **dadurch gekennzeichnet, dass** der mindestens eine Bolzen (70), insbesondere der Bolzenkopf (71) durch eine Innenumformung und/oder eine Außenumformung, insbesondere eine Innenhochdruckumformung, des Querträgers (11) kraftschlüssig und/oder formschlüssig bezüglich des Aufnahmeteils (45) fixiert ist.

15. Anhängekupplung nach einem der vorhergehenden Ansprüche, **dadurch gekennzeichnet, dass** das Anbauteil (34) einen Träger für ein Lager zum Lagern des Kupplungsarms (80) zwischen einer Gebrauchsstellung (G) und einer Nichtgebrauchsstellung (N) und/oder für eine Aufnahme zur lösbaren Befestigung, insbesondere steckbaren Befestigung, des Kupplungsarms und/oder eine feste Montagebasis zur ortsfesten Befestigung des Kupplungsarms (80) an der Trägeranordnung (10) aufweist oder bildet.

## Claims

1. Trailer coupling for a motor vehicle with a support assembly (10) which has a cross-member (11) provided for mounting on a rear section of a motor vehicle and a mounting (40) fitted to the cross-member (11) for holding a coupling arm (80) of the trailer coupling, wherein the coupling arm (80) is provided for attaching a trailer or a load carrier, wherein the mounting (40) includes at least one bolt (70), which is inserted in a through opening (75) of a locating part (45) and is supported by a bolt head (71) on the locating part (45) next to the through opening (75), **characterised in that** a bolt shaft (72) of the bolt or bolts (70) for fixing an attachment (34), in particular a holding body (42) for the coupling arm (80), protrudes from the locating part (45) in the insertion axial direction (S) and has a screw thread for screwing the attachment to the bolt shaft (72) or forms a clamping base for wedging the attachment (34), and that the bolt head (71) is supported by a forming section (77) against the insertion axial direction (S) and/or the bolt or bolts (70) is or are held non-rotatably with the aid of at least one anti-twist lock contour (76) on the through opening (75).

2. Trailer coupling according to claim 1, **characterised in that** the bolt shaft (72) has a screw thread and/or at least one anti-twist lock contour (76) provided in particular on the bolt head (71) or between the bolt head (71) and the bolt shaft (72), and/or the the bolt or bolts (70) is or are in the form of a carriage bolt.

3. Trailer coupling according to claim 1 or 2, **characterised in that** the cross-member (11) or a side member (12) of the support assembly (10) forms the locating part (45).

4. Trailer coupling according to any of the preceding claims, **characterised in that** the bolt or bolts (70) penetrate(s) opposite walls of a profile body of the support assembly (10), in particular the cross-member (11).

5. Trailer coupling according to any of the preceding claims, **characterised in that** the forming section (77) is formed in one piece by the cross-member (11).

6. Trailer coupling according to any of the preceding claims, **characterised in that** the forming section (77) is formed by a forming body separate from the locating part (45), in particular the cross-member (11) or a profile of the cross-member (11).

7. Trailer coupling according to any of the preceding claims, **characterised in that** the forming section (77) is formed by an arm body or bracket body extending into the through opening (75).

8. Trailer coupling according to any of the preceding claims, **characterised in that** the through opening (75) for the bolt or bolts (70) is produced by a cutting or milling of a base body of the locating part (45), wherein a section of the base body suitable for producing the forming section (77) remains in the internal cross-section of the through opening (75).

9. Trailer coupling according to any of the preceding claims, **characterised in that** the cross-member (11) penetrates a through opening (43) bordered by the locating part (45) and/or the locating part (45) forms a locating sleeve, in particular integral, for the cross-member (11).

10. Trailer coupling according to any of the preceding claims, **characterised in that** the locating part (45) is held positively in a holder section (28) of the cross-member (11).

11. Trailer coupling according to any of the preceding claims, **characterised in that** the mounting (40) has the locating part (45) and a closing part, which bound a cross-member location (11) in the form of a through opening (43) for the cross-member (11) and are joined together, in particular by form-fitting or material bonding and/or with the aid of a screw connection and/or by a forming of the cross-member (11) in the area of the mounting (40), effected in particular by the bolt head (71).

12. Trailer coupling according to any of the preceding claims, **characterised in that** the attachment (34) has a form-fitting location (239) for the positive holding of the cross-member (11).

13. Trailer coupling according to any of the preceding claims, **characterised in that** the bolt head (71) is clamped in a sandwich manner between the cross-member (11) and the locating part (45), and/or that the attachment (34) is supported in particular positively on the locating part (45).

14. Trailer coupling according to any of the preceding claims, **characterised in that** the bolt or bolts (70), in particular the bolt head (71), is or are fixed by internal forming and/or external forming, in particular internal high-pressure forming of the cross-member (11), frictionally or positively relative to the locating part (45).

15. Trailer coupling according to any of the preceding claims, **characterised in that** the attachment (34) has or forms a support for a bearing to support the coupling arm (80) between a position of use (G) and an inoperative position (N), and/or for a location for releasable attaching, in particular plug-in attaching, of the coupling arm and/or a fixed fitting base for immovable attaching of the coupling arm (80) to the support assembly (10).

## Revendications

1. Attelage de remorque pour un véhicule automobile avec un ensemble de support (10), qui présente une traverse (11) prévue pour être agencée au niveau d'une partie arrière d'un véhicule automobile et un système de maintien (40) agencé au niveau de la traverse (11), pour maintenir un bras d'attelage (80) de l'attelage de remorque, dans lequel le bras d'attelage (80) est prévu pour fixer une remorque ou un support de charges, dans lequel le système de maintien (40) comprend au moins un boulon (70), qui est enfiché dans une direction axiale d'enfichage (S) dans un orifice de passage (75) d'une partie de logement (45) et qui est soutenu par une tête de boulon (71) au niveau de la partie de logement (45) à côté de l'orifice de passage (75), **caractérisé en ce qu'**une tige de boulon (72) de l'au moins un boulon (70) fait saillie de la partie de logement (45) dans la direction axiale d'enfichage (S) pour la fixation d'une pièce rapportée (34), en particulier d'un corps de maintien (42) pour le bras d'attelage (80) et présente un filetage de vissage pour assembler par vissage la pièce rapportée à la tige de boulon (72) ou forme une base de serrage pour assembler par serrage la pièce rapportée (34), et **en ce que** la tête de boulon (71) est soutenue par une partie de façonnage (77) à l'encontre de la direction axiale d'enfichage (S) et/ou l'au moins un boulon (70) est maintenu de manière bloquée en rotation au niveau de l'orifice de passage (75) à l'aide d'au moins un contour de blocage anti-rotation (76).

2. Attelage de remorque selon la revendication 1, **caractérisé en ce que** la tige de boulon (72) présente un filetage de vissage et/ou au moins en particulier un contour de blocage anti-rotation (76) agencé au niveau de la tête de boulon (71) ou entre la tête de boulon (71) et la tige de boulon (72) et/ou l'au moins un boulon (70) est configuré sous la forme d'une vis à tête bombée.

3. Attelage de remorque selon la revendication 1 ou 2, **caractérisé en ce que** la traverse (11) ou un support latéral (12) de l'ensemble de support (10) forme la partie de logement (45).

4. Attelage de remorque selon l'une quelconque des revendications précédentes, **caractérisé en ce que** l'au moins un boulon (70) traverse des parois se faisant face d'un corps profilé de l'ensemble de support (10), en particulier de la traverse (11).

5. Attelage de remorque selon l'une quelconque des revendications précédentes, **caractérisé en ce que** la partie de façonnage (77) est formée d'un seul tenant par la traverse (11).

6. Attelage de remorque selon l'une quelconque des revendications précédentes, **caractérisé en ce que** la partie de façonnage (77) est formée par un corps de déformation séparé de la partie de logement (45), en particulier la traverse (11) ou un profilé de la traverse (11).

7. Attelage de remorque selon l'une quelconque des revendications précédentes, **caractérisé en ce que** la partie de façonnage (77) est formée par un corps de bras ou un corps d'étrier faisant saillie dans l'orifice de passage (75).

8. Attelage de remorque selon l'une quelconque des revendications précédentes, **caractérisé en ce que** l'orifice de passage (75) pour l'au moins un boulon (70) est fabriqué par un usinage par découpage ou fraisage d'un corps de base de la partie de logement (45), dans lequel une section du corps de base adaptée pour la fabrication de la partie de façonnage (77) reste immobile dans la section transversale intérieure de l'orifice de passage (75).

9. Attelage de remorque selon l'une quelconque des revendications précédentes, **caractérisé en ce que** la traverse (11) traverse un orifice de passage (43) délimité par la partie de logement (45), et/ou la partie de logement (45) forme une douille de logement en particulier d'un seul tenant pour la traverse (11).

10. Attelage de remorque selon l'une quelconque des revendications précédentes, **caractérisé en ce que** la partie de logement (45) est maintenue par complémentarité de forme au niveau d'une zone du système de maintien (28) de la traverse (11).

11. Attelage de remorque selon l'une quelconque des revendications précédentes, **caractérisé en ce que** le système de maintien (40) présente la partie de logement (45) et une partie de fermeture, qui délimitent un logement de traverse (11) configuré sous la forme de l'orifice de passage (43) pour la traverse (11) et sont reliées l'une à l'autre,
en particulier par complémentarité de forme et/ou par liaison de matière et/ou à l'aide d'un assemblage par vissage et/ou par un façonnage de la traverse (11) dans la zone du système de maintien (40) provoqué en particulier par la tête de boulon (71).

12. Attelage de remorque selon l'une quelconque des revendications précédentes, **caractérisé en ce que** la pièce rapportée (34) présente un logement à complémentarité de forme (239) pour loger par complémentarité de forme la traverse (11).

13. Attelage de remorque selon l'une quelconque des revendications précédentes, **caractérisé en ce que** la tête de boulon (71) est coincée à la manière d'un sandwich entre la traverse (11) et la partie de logement (45), et/ou **en ce que** la partie rapportée (34) est soutenue en particulier par complémentarité de forme au niveau de la partie de logement (45).

14. Attelage de remorque selon l'une quelconque des revendications précédentes, **caractérisé en ce que** l'au moins un boulon (70), en particulier la tête de boulon (71), est fixé à force et/ou par complémentarité de forme par rapport à la partie de logement (45) par un façonnage intérieur et/ou un façonnage extérieur, en particulier un façonnage intérieur sous haute pression, de la traverse (11).

15. Attelage de remorque selon l'une quelconque des revendications précédentes, **caractérisé en ce que** la pièce rapportée (34) présente ou forme un support pour un palier pour le montage du bras d'attelage (80) entre une position d'utilisation (G) et une position de non-utilisation (N) et/ou pour un logement pour la fixation amovible, en particulier la fixation enfichable, du bras d'attelage et/ou une base de montage fixe pour la fixation stationnaire du bras d'attelage (80) au niveau de l'ensemble de support (10).
